# EUROPEAN PATENT APPLICATION

(11) **EP 1 203 604 A2**
(43) Date of publication of application: **08.05.2002**
(21) Application number: 01126303.5
(22) Date of filing: 06.11.2001
(51) Int. Cl.: A63F 13/12

(54) **Apparatus and method for generating and delivering entertainment data**

(30) Priority: 06.11.2000 JP 2000337498; 15.06.2001 JP 2001182049
(71) Applicant: Sony Computer Entertainment Inc., Tokyo 107-0052 (JP)
(72) Inventor: Otsu, Tamichi, Minato-ku, Tokyo 107-0052 (JP)
(74) Representative: Müller . Hoffmann & Partner Patentanwälte

(57) **Abstract**

A game server delivers entertainment data to entertainment terminal devices with the same contents at the same time through a broadband broadcast line. The entertainment data to be delivered may be scrambled. This relieves the load of processing on the game server, prevents time lags in transmittance of the data from occurring, and simplifies the fee collection system.

## Description

This application is related to Japanese Patent Application No. 2000-337498 filed on November 6, 2000, and No. 2001-182049 filed on June 15, 2001, based on which this application claims priority under the Paris Convention and the contents of which are incorporated herein by reference.

### BACKGROUND OF THE INVENTION

### 1. Field of the Invention

The present invention relates to apparatus and methods for generating entertainment data to be delivered to entertainment terminal devices; entertainment terminal devices and methods for executing entertainment processes based on entertainment application programs; entertainment systems each made up from an entertainment data generating apparatus, entertainment terminal devices, and a data delivery machine for delivering entertainment data; processing programs to be executed on a computer for executing the above-described operations; and storage media storing therein the processing programs to be executed on a computer for executing the above-described operations.

### 2. Description of the Related Art

Currently, entertainment systems are known in each of which video game machines are connected through a network with a game server for processing and delivering various data on games, and game players play a video game with their respective video game machines. Such entertainment systems are generally called multiplayer network game systems.

In such a multiplayer network game system, the game server processes data transmitted from each video game machine (such data will be referred to as player data hereinafter) to which the game server is connected through a network, generates data necessary for each video game machine to execute the game (such data will be referred to as game data hereinafter), and then transmits game data generated for the video game machine to each video game machine. Player data to be transmitted from each video game machine to the game server may include the position in the game space of the game character being operated by the player of the video game machine and operation conditions of the game character. Game data to be transmitted from the game server to each video game machine may include the position of another game character (being operated by the player of another video game machine) existing near the game character of the player of the video game machine and operation conditions of the other game character.

As described above, in the conventional multiplayer network game system, the game server generates units of game data specific to the respective video game machines, besides the game server transmits each unit of game data to the corresponding video game machine. The game data generating process and transmitting process are therefore very complicated. Particularly in case of a network game in which several thousands or more players are participating, it is difficult for the server machine to transmit game data generated for the player to every player.

Besides, in such conventional multiplayer network game system, various communication lines different in communication speed and path, e.g., public telephone lines, mobile communication systems such as PHS (Personal Handy-phone System: Trademark) and portable telephone systems, and digital communication lines such as ISDN (Integrated Services Digital Network), are used for the network connecting between each video game machine and the game server, so that time lags may occur in transmittance of game data from the game server to video game machines. This may bring about a difference in time elapse in the game between players using different communication lines and there is a problem that a game without injustice to any player is difficult to provide.

Furthermore, different communication lines have different fee systems. Therefore, a number of collection systems for the entry fee or the like of a network game must be provided to cope with the different fee systems of the different communication lines to be used. This is very complicated and may cause an increase in cost.

### SUMMARY OF THE INVENTION

An object of the present invention is to provide an apparatus and a method for generating entertainment data, an entertainment terminal device, a method for executing an entertainment process, an entertainment system, computer program products, in the following also referred to as processing programs, to be executed on a computer for the above methods, and storage media storing therein the processing programs to be executed on a computer for the above methods, usable in systems in which game machines are connected with a game server through a network and game data is delivered from the game server to each game machine, such as multiplayer network game systems, wherein the load of processing on the server can be relieved, time lags in transmittance of data can be prevented from occurring, and a simplified fee collection system can be realized.

The apparatus for generating entertainment data according to the present invention is defined in claim 1, the method for generating entertainment data according to the present invention is defined in claim 3. Preferred embodiments thereof are defined in claims 2 and 4, respectively. The entertainment terminal according to the present invention is defined in claim 5 and the method for executing an entertainment process according to the present invention is defined in claim 6. The entertainment system according to the present invention is defined in claim 7. Preferred embodiments thereof are defined in claims 8 to 10, respectively. Computer program products/processing programs according to the present invention are defined in claim 11 and storage media according to the present invention are defined in claim 12.

According to the present invention, entertainment data is delivered to a plurality of entertainment terminal devices with the same contents at the same time through a broadband broadcast communication line. Out of the entertainment data delivered, each entertainment terminal device selects data necessary for the device to execute a predetermined entertainment process. On the basis of the data selected and operation input data obtained from an operation terminal, the entertainment terminal device executes the predetermined entertainment process, and then sends out terminal data generated as a result of the execution of the predetermined entertainment process to a low-speed communication line.

An apparatus for generating entertainment data receives the terminal data from all of the entertainment terminal devices through the low-speed communication line, and then generates, on the basis of the terminal data from all of the entertainment terminal devices, entertainment data containing data necessary for each entertainment terminal device to execute a predetermined entertainment process.

According to the present invention, entertainment data is delivered to entertainment terminal devices with the same contents at the same time through the broadband broadcast communication line. The entertainment data may be delivered in a scrambled state. In this case, the payment of a predetermined fee may be demanded for descrambling the entertainment data.

According to the present invention, as described above, entertainment data is delivered to the entertainment terminal devices with the same contents at the same time through the broadband broadcast communication line. Therefore, no time lags occur in transmittance of the data to the entertainment terminal devices. Besides, it is unnecessary to generate units of entertainment data specific to the respective entertainment terminal devices, and to transmit each unit of entertainment data to the corresponding entertainment terminal device. This can relieve the load of processing.

Besides, out of the entertainment data delivered, each entertainment terminal device selects data necessary for the device to execute a predetermined entertainment process. Therefore, any entertainment device can execute its predetermined entertainment process according to the present invention.

Further, in case of imposing a predetermined fee upon descrambling the entertainment data, an existing receiving fee collection system of a broadcasting system using scrambled lines can be used for fee collection without any change. In this case, it is not required to newly establish a fee collection system. The fee collection for delivery of entertainment data can be done in a simple manner.

Other and further objects and features of the present invention will become obvious upon understanding of the illustrative embodiments about to be described in connection with the accompanying drawings or will be indicated in the appended claims, and various advantages not referred to herein will occur to one skilled in the art upon employing the invention in practice.

### BRIEF DESCRIPTION OF THE DRAWINGS

FIG. 1 is a block diagram schematically showing the whole construction of a multiplayer network game system according to an embodiment of the present invention;
FIG. 2 is a flowchart of a procedure for processing game data, player data and transmitting/receiving such data in the multiplayer network game system of FIG. 1;
FIG. 3 is a flowchart of a procedure in the game server to identify a video game machine user and judge as to whether or not the user may participate in a game;
FIG. 4 is a flowchart of a game processing routine in the game server to generate game data; and
FIG. 5 is a flowchart of a procedure in a video game machine to participate in a network game and execute the game.

### DETAILED DESCRIPTION OF THE PREFERRED EMBODIMENT

Hereinafter, an embodiment of the present invention will be described with reference to the accompanying drawings.

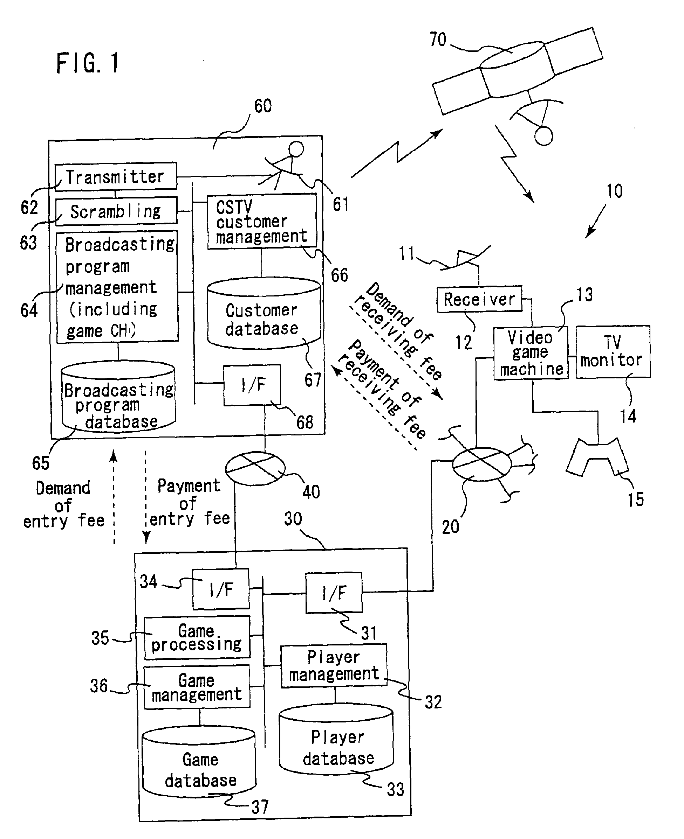

Referring to FIG. 1, a multiplayer network game system according to an embodiment of the present invention can be generally divided into a user terminal system 10 including a video game machine 13 as an entertainment terminal device of a user; a game server 30 for managing multiplayer network games; a CS broadcasting system 60 capable of transmitting broadband broadcast signals in CS (Communication Satellite) communication; a communication satellite 70 for the CS communication; a low-speed communication line at, e.g., about 9800 bps to 64 kbps, such as a general telephone line, (in this embodiment, referred to as a telephone line 20 by way of example); and an exclusive or public broadband communication line 40 for connecting between the CS broadcasting system 60 and the game server 30. The low-speed communication line is not limited to a public telephone line, and may also be a mobile communication line such as PHS system or a portable telephone system, or an optical digital communication line such as ISDN. Besides, the broadcast communication is not limited to CS communication, and may also be communication using an analogue or digital BS (Broadcasting Satellite) line, an analogue or digital ground wave broadcasting line, an analogue or digital cable TV broadcasting line, or the like, all of which are broadband communication line capable of transmitting a large amount of data to a plurality of terminal devices at the same time. Besides, the CS broadcasting system 60 and the game server 30 may be integrated into a single system.

The user terminal system 10 includes the above-described video game machine 13 with which the user can play a video game being displayed on a TV monitor 14 through a controller 15, an antenna 11 and a receiver 12 capable of receiving broadband broadcast signals, e.g., CS broadcast signals. The receiver 12 may be a general CS tuner for receiving and demodulating CS broadcast signals transmitted from the communication satellite 70. Besides, the CS tuner can descramble scrambled signals of each predetermined channel to output audio/video signals of CS television broadcasting or data of CS data broadcasting.

The video game machine 13 is an entertainment machine that has not only a function of executing video games on the basis of various game application programs but also functions for other operations or signal processing based on various other application programs. The video game machine 13 still has functions of connecting with a modem for communication through the telephone line 20, and taking therein audio/video signals of CS television broadcasting and data of CS data broadcasting received through the receiver 12. Each of the above-described application programs can be read out from, e.g., an optical disk or a semiconductor memory, or downloaded through a communication network. The flow of a procedure in this video game machine 13 to execute a multiplayer network game will be described later.

The game server 30 includes an interface (I/F) 31 with the telephone line 20 to which each video game machine 13 is connected; a player management section 32 for managing data of players participating in each multiplayer network game (in practice, data sent from each video game machine); a player database 33 for accumulating various data of the players; a game management section 36 for managing network games; a game database 37 for accumulating data of games; a game processing section 35 for generating game data to be delivered to each video game machine 13, which will be described later; and an interface (I/F) 34 with the exclusive or public broadband communication line 40. The game server 30 can be constituted by a single server machine or several server machines. The flow of a procedure in this game server 30 to execute a multiplayer network game will be described later.

The CS broadcasting system 60 may have almost the same construction as a general CS broadcasting system, which includes a broadcasting program management section 64 for managing broadcasting programs; a broadcasting program database 65 for accumulating data of broadcasting programs; a CSTV customer management section 66 for managing data of customers registered for receiving CS television broadcasting or CS data broadcasting; a customer database 67 for accumulating the customer data; a scrambling section 63 for scrambling broadcast signals for CS broadcasting in a predetermined manner; and a transmitter 62 and an antenna 61 for transmitting the scrambled CS broadcast signals to the communication satellite 70. In addition, the CS broadcasting system 60 of this embodiment includes an interface 68 with the exclusive or public broadband communication line 40. The broadcasting program database 65 accumulates game data transmitted from the game server 30, as a kind of broadcasting program data for CS broadcasting. The broadcasting program management section 64 manages game data stored in the broadcasting program database 65 to be broadcasted using one of CS data broadcasting channels (e.g., a game channel). In this case, the number of the game channel does not need to be one, and two or more game channels may be used for this purpose. Besides, each game channel may not be exclusive to game data of one game. Game data of two or more games can be transmitted through one channel by time sharing.

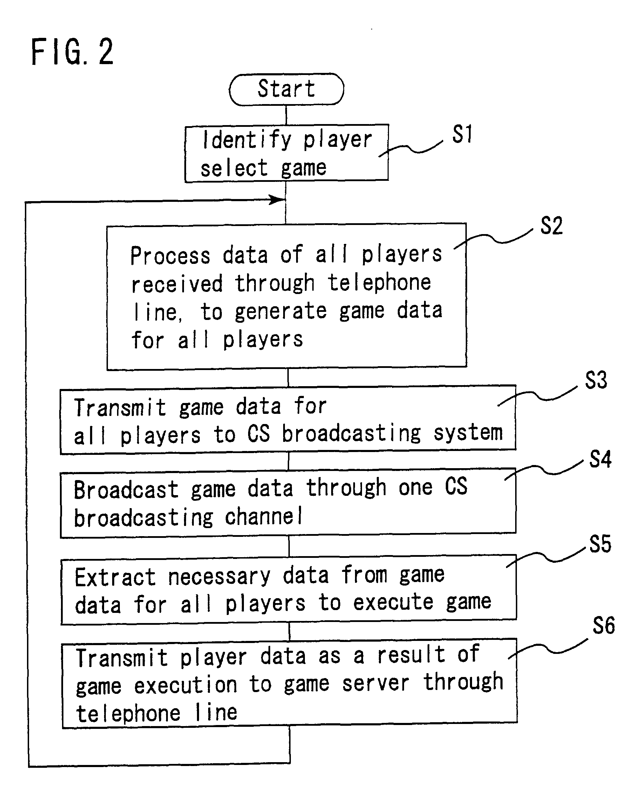

FIG. 2 illustrates the flow of a procedure for processing game data and player data, and transmitting/receiving such data in the multiplayer network game system of FIG. 1.

In the network game system of FIG. 1, when multiplayer network games in which a plurality of players are participating are taken place, the game server 30 identifies, in step S1 of FIG. 2, each video game machine 13 that has accessed the game server 30 through the telephone line 20. At this time, in each video game machine 13, the player can select a game in which he or she intends to participate.

In the next step S2, the game server 30 processes all player data received through the telephone line 20 from all players participating in a multiplayer network game (in practice, from the video game machines 13 of the players) to generate game data in accordance with the player data of all players.

In this embodiment, player data includes the position in the game space of the game character being operated by the player and operation conditions of the game character, and game data includes the positions of the game characters being operated by all players participating in the network game, the positions of other objects, and operation conditions of them. In the conventional network game system, game data generated and transmitted by the game server gives only information necessary for each player playing the game. For example, the game data includes only the position of another game character existing near the game character being operated by the player of a video game machine, and operation conditions of the other game character. Contrastingly, in this embodiment, the game data includes the positions of the game characters being operated by all players participating in the network game, and operation conditions of the game characters. For example, in case of a role-playing game in which many players participate on a vast map, game data which includes information on movement and position of the game characters being operated by all players is generated as the above mentioned game data. The game data is delivered to the video game machine of every player participating in the game.

In the next step S3, the game server 30 transmits the game data for all players to the CS broadcasting system 60 through the exclusive or public broadband line 40.

In the next step S4, the CS broadcasting system 60 having received the game data from the game server 30 broadcasts the game data through, e.g., one CS broadcasting game channel.

In the next step S5, the receiver 12 of each user terminal system 10 receives the game data through the CS broadcasting game channel, and the video game machine 13 then extracts data necessary for the video game machine 13 to execute the game from the received game data for all players.

In the next step S6, the video game machine 13 transmits player data, which has been changed with the progress of the game, to the game server 30 through the telephone line 20. After this, the flow returns to step S2 to repeat the procedure from step S2 to step S6 till the game ends or the player ends the game.

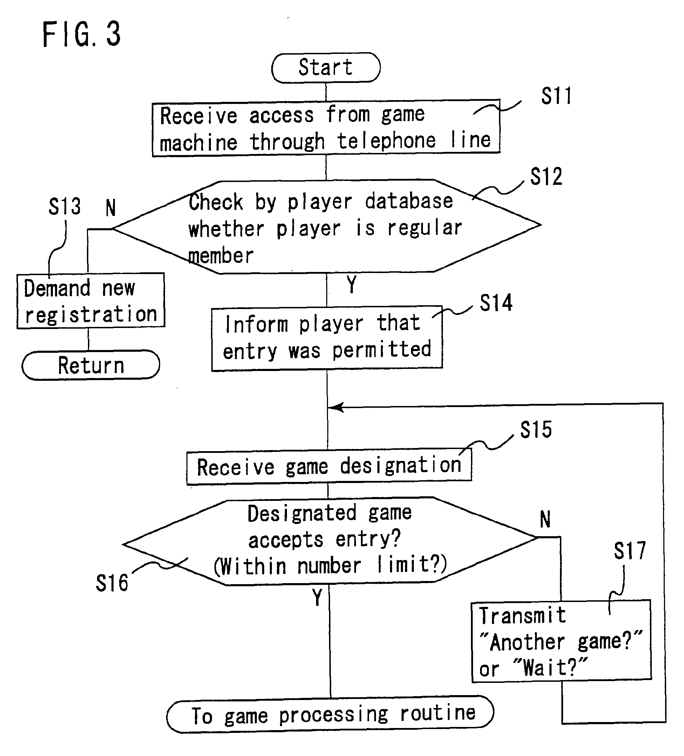

FIG. 3 illustrates the flow of a procedure in the game server 30 to identify each video game machine 13 that has accessed the game server 30 through the telephone line 20, and to judge as to whether or not the user of the video game machine 13 may participate in the game requested. This is a detail of the procedure in step S1 of FIG. 2.

When the game server 30 of FIG. 1 receives an access of a video game machine 13 through the telephone line 20 in step S11, the player management section 32 of the game server 30 refers, in step S12, to player registration data having accumulated in the player database 33 to thereby check as to whether or not the user of the video game machine 13 has been registered as a regular member.

In the checking process in the S12, if the player management section 32 judges that the user of the video game machine 13 has not been registered as a regular member, the flow advances to step S13, in which the player management section 32 transmits, to the video game machine 13 through the telephone line 20, a message to reject the access, e.g., a message informing the user that he or she has not yet been registered, together with a message inquiring whether the user wants to be registered.

When the player management section 32 judges that the user of the video game machine 13 has been registered as a regular member, the flow advances to step S14, in which the player management section 32 transmits, to the video game machine 13 through the telephone line 20, a message to permit the user's entry for this network game system. The flow then advances to step S15.

In step S15, the game management section 36 waits for receiving, from the user of the video game machine 13 through the telephone line 20, a game designation signal indicating which game the user intends to participate in. When the game management section 36 receives the game designation signal, the flow advances to step S16.

In step S16, the game management section 36 judges as to whether or not the game designated by the user of the video game machine 13 is in a state possible to accept a new player. This judgment can be made by the maximum number of players who can participate in the game, and current game conditions.

If the game management section 36 judges, in step S16, that the designated game can not accept any new player at present, the flow advances to step S17, in which the game management section 36 transmits, to the video game machine 13 through the telephone line 20, a message advising the user of an entry for another game, or a message requesting the user to wait till the designated game becomes possible to accept a new player.

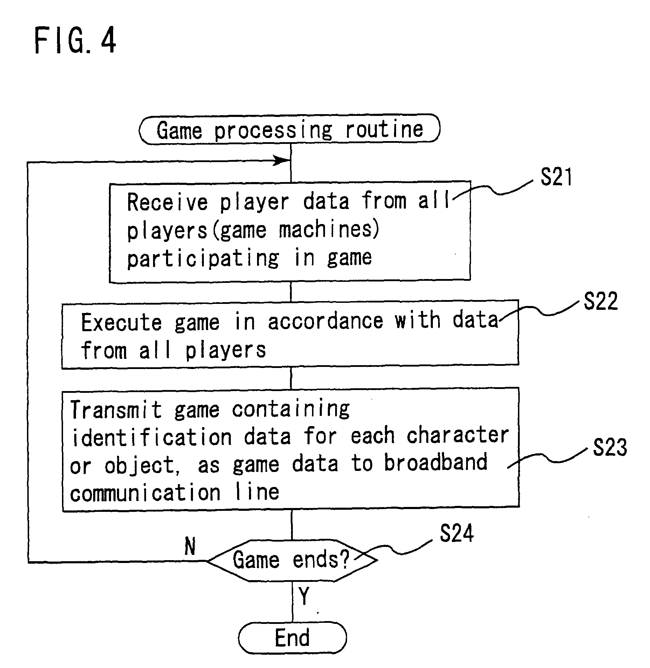

When the game management section 36 judges, in step S16, that the designated game can accept the user of the video game machine 13 as a new player, the flow advances to a game processing routine for generating game data shown in FIG. 4, which is executed by the game processing section 35 of the game server 30.

FIG. 4 illustrates the flow of the game processing routine in the game server 30 to generate game data.

In step S21, the game processing section 35 receives data from all players (all video game machines 13) participating in the game through the telephone line 20.

In the next step S22, the game processing section 35 makes the game progress in accordance with the data from all players. In the next step S23, the game processing section 35 generates game data for all players in accordance with current game conditions, and transmits the game data to the CS broadcasting system 60 through the exclusive or public broadband line 40. The game data contains therein identification data with which each video game machine 13 can identify and select the game characters and objects in the game related to the video game machine 13.

In the next step S24, the game processing section 35 judges as to whether or not the game ends. If the game has not ended, the game processing section 35 repeats the procedure from step S21 to step S24 till the game ends.

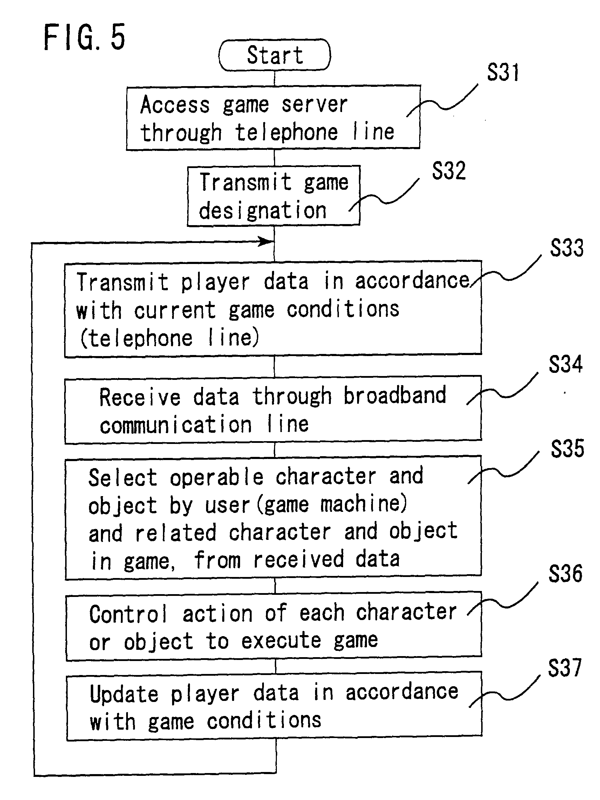

FIG. 5 illustrates the flow of a procedure in a video game machine 13 to participate in a network game and execute the game. The program for this procedure in the video game machine 13 is contained in a game application program, e.g., downloaded from the game server 30, or delivered or sold with a storage medium such as an optical disk or a semiconductor memory.

When the user of the video game machine 13 intends to participate in a network game with controlling a controller 15, he or she connects, in step S31, the video game machine 13 with the game server 30 through the telephone line 20 to access the game server 30. After the game server 30 judges the user to be a regular member, the video game machine 13 receives a reply of the game server 30 to permit the entry for the network game system, and the user selects a desired game with the controller 15, the video game machine 13 transmits, in step S32, a signal for designating the game selected to the game server 30 through the telephone line 20.

When receiving a reply of the game server 30 to permit the entry for the designated game, the video game machine 13 participates in the game, and transmits current player data to the game server 30 through the telephone line 20 in step S33.

In the next step S34, the video game machine 13 receives data transmitted by broadband CS broadcasting through the communication satellite 70. In the next step S35, the video game machine 13 extracts game data from the above described received data and further extracts identification data as described above from the game data. On the basis of the extracted identification data, the video game machine 13 selects a game character, object, or the like, operable through the controller 15 of the video game machine 13, and another game character, object, or the like, related to the above game character, object, or the like, e.g., an adjacent game character being operated by another player.

In the next step S36, the video game machine 13 controls the action and so on of each of the above game characters or the like to execute the game.

In the next step S37, the video game machine 13 updates its player data in accordance with current game conditions. The flow then returns to step S33, in which the video game machine 13 transmits the updated player data to the game server 30 through the telephone line 20.

In the multiplayer network game system of this embodiment, game entry fees, game playing fees, or the like, can be collected from the players who participated in a game, by using, e.g., the existing collection system for receiving fees of CS television broadcasting and CS data broadcasting in the CS broadcasting system 60.

More specifically, in the multiplayer network game system of this embodiment, for example, one of CS data broadcasting channels is used as a game channel and game data as described above is delivered through the game channel. Such a game channel can be provided as a scrambled toll channel. In this case, the above-described entry fees or the like can be collected as the receiving fees of the toll channel. Alternatively, the game channel may be provided as a free channel. In this case, the above-described entry fees or the like may be collected as part of the total receiving fee of CS data broadcasting of each player.

In case of collecting the game entry fees or the like by using the receiving fee collection system of CS data broadcasting as described above, the CSTV customer database 67 of the CS broadcasting system 60 stores therein information on each player (the user of each video game machine 13) as data of a customer who has made a contract for receiving CS broadcasting. The CSTV customer management section 66 manages customers and their receiving fees with such customer data. The CSTV customer management section 66 calculates a receiving fee of the user of each video game machine 13 who received the above-described game channel. The CS broadcasting system 60 then demands the payment of the receiving fee of the game channel from the user of the video game machine 13 and the user pays the receiving fee of the game channel to the CS broadcasting system 60. In this case, the receiving fee of the game channel may include the receiving fee for CS broadcasting actually received, an agent fee for fee collection, etc., in addition to the entry fee for the game in which the user of the video game machine 13 participated.

On the other hand, in the game server 30, for example, the player management section 32 calculates a game entry fee of each player. The game server 30 then demands the payment of the entry fee from the CS broadcasting system 60. In response to this, the CS broadcasting system 60 pays, to the game server 30, the game entry fee that is calculated by subtracting the receiving fee of CS broadcasting, the agent fee, etc., as described above, from the total receiving fee received from the player.

As described above, in the multiplayer network game system in which, e.g., from several hundreds to scores thousands of players access the game server 30 (constituted by only one server machine or several server machines as a set) to play a network game, up communication from each video game machine 13 to the server machine 30 undertakes only a small amount of data such as player data. Contrastingly, in down communication from the game server 30 to each video game machine 13, a large amount of data must be transmitted at a high speed. For this reason, in the network game system of this embodiment, an existing low-speed communication line at, e.g., about 9800 bps to 64 kbps, such as the telephone line 20, is used for the up communication from each video game machine 13 to the server machine 30, and an existing broadband communication line such as a digital CS communication line is used for the down communication from the game server 30 to each video game machine 13. Therefore, in this embodiment, multiplayer network games can be realized using the existing communication infrastructures.

In the network game system of this embodiment, the game server 30 generates a single unit of game data in accordance with data of all players participating in a network game. The game data is transmitted to all video game machines 13 participating in the game, at the same time through a broadband broadcast communication line such as a CS broadcasting line. Therefore, unlike the conventional network game system, complicated processes are not required in which units of game data specific to the respective video game machines are generated and each of them is transmitted to the corresponding video game machine. That is, in the network game system of this embodiment, only a single unit of game data suffices to be generated and transmitted. As a result, the load of generating game data on the game server can be relieved, and also the load on the network line can be relieved.

Besides, in the network game system of this embodiment, the same game data is delivered to all video game machines at the same time. Thus there occurs no difference in time elapse in the game between players. This makes it possible to provide the game without injustice to any player.

Further, in the network game system of this embodiment, game entry fees, game playing fees, or the like, can be collected using an existing fee collection system such as the receiving fee collection system of CSTV. Therefore, it is not required to newly establish a fee collection system. Besides, it is not required to use different fee collection systems of different communication lines as in the conventional network game system. In the network game system of this embodiment, therefore, the entry fees or the like can be collected simply at a low cost.

It is of course that the present invention is not limited to the above-described embodiments and various changes and modifications can be made without departing from the technical scope of the invention defined in the appended claims. The entertainment machine of the present invention is, for example, not limited to the video game machine explained in the embodiment.

## Claims

1. An apparatus for generating entertainment data, the apparatus comprising:
means for receiving terminal data from entertainment terminal devices through a low-speed communication line; and
means for generating entertainment data containing data necessary for each of the entertainment terminal devices to execute a predetermined entertainment process on the basis of the terminal data from the entertainment terminal devices.

2. The apparatus according to claim 1, further comprising:
means for transmitting the entertainment data to a data delivery machine, the machine delivering the entertainment data to the entertainment terminal devices at the same time through a broadband broadcast communication line.

3. A method for generating entertainment data, the method comprising the steps of:
receiving terminal data from entertainment terminal devices through a low-speed communication line; and
generating entertainment data containing data necessary for each of the entertainment terminal devices to execute a predetermined entertainment process on the basis of the terminal data from the entertainment terminal devices.

4. The method according to claim 3, further comprising the step of:
transmitting the entertainment data to a data delivery machine, the machine delivering the entertainment data to the entertainment terminal devices at the same time through a broadband broadcast communication line.

5. An entertainment terminal device comprising:
means for selecting data necessary for the device to execute a predetermined entertainment process, out of data delivered to entertainment terminal devices including the device with the same contents at the same time through a broadband broadcast communication line;
means for executing the entertainment process on the basis of the data selected and operation input data obtained from an operation terminal; and
means for sending out data generated as a result of the execution of the entertainment process to a low-speed communication line.

6. A method for executing an entertainment process, the method comprising the steps of:
selecting data necessary for executing a predetermined entertainment process, out of data delivered to entertainment terminal devices with the same contents at the same time through a broadband broadcast communication line;
executing the entertainment process on the basis of the data selected and operation input data obtained from an operation terminal; and
sending out data generated as a result of the execution of the entertainment process to a low-speed communication line.

7. An entertainment system comprising:
entertainment terminal devices each of which selects data necessary for the device to execute a predetermined entertainment process, out of entertainment data delivered to all of the entertainment terminal devices with the same contents at the same time through a broadband broadcast communication line, executes the entertainment process on the basis of the data selected and operation input data obtained from an operation terminal, and then sends out terminal data generated as a result of the execution of the entertainment process to a low-speed communication line;
an entertainment data generation apparatus that receives terminal data from all of the entertainment terminal devices through the low-speed communication line, and then generates entertainment data containing data necessary for each of the entertainment terminal devices to execute a predetermined entertainment process on the basis of the terminal data from all of the entertainment terminal devices; and
a data delivery machine for delivering the entertainment data to all of the entertainment terminal devices at the same time through the broadband broadcast communication line.

8. The system according to claim 7, wherein the data delivery machine comprises scrambling means for scrambling the entertainment data to be delivered.

9. The system according to claim 8, further comprising receivers for receiving the entertainment data scrambled from the data delivery machine, descrambling the entertainment data, and then sending the entertainment data descrambled to the entertainment terminal devices, respectively.

10. The system according to claim 9, wherein the data delivery machine demands payment from the user of each entertainment terminal device that received the entertainment data descrambled.

11. Computer program product, comprising computer program means adapted to perform the method steps as defined in anyone of claims 3, 4 and 6 when being executed on a computer, digital signal processor or the like.

12. A storage medium storing therein a computer program product as defined in claim 11.
